Europäisches Patentamt

European Patent Office

Office européen des brevets

(19)

(11) Veröffentlichungsnummer: **0 093 291**
A2

(12) # EUROPÄISCHE PATENTANMELDUNG

(21) Anmeldenummer: 83103581.1

(22) Anmeldetag: 14.04.83

(51) Int. Cl.³: **G 06 K 19/00**

(30) Priorität: 03.05.82 CH 2689/82

(43) Veröffentlichungstag der Anmeldung:
09.11.83 Patentblatt 83/45

(84) Benannte Vertragsstaaten:
AT BE CH DE FR GB IT LI LU NL SE

(71) Anmelder: Dr. Welp Entwicklungs-KG
Dieselstrasse 9
D-6350 Bad Nauheim(DE)

(72) Erfinder: Welp, Ullrich, Dr.
Steingasse 1
D-6350 Bad Nauheim(DE)

(74) Vertreter: Schlagwein, Udo
Anwaltsbüro Ruppert & Schlagwein Bahnhofsallee 11
D-6350 Bad Nauheim(DE)

(54) Verfahren zur Herstellung von Mirkofilmkarten, nach diesem Verfahren hergestellte Mirkofilmkarte sowie Mikrofilmkamera zur Durchführung des Verfahrens.

(57) Bei einer Mikrofilmkarte werden Sortierkriterien statt in Form einer Lochung optisch auf einem Codierfeld (4) des Mikrofilms (3) angebracht. Dieses Codierfeld (4) ist an einer Schmalseite der Mikrofilmkarte (1) vorgesehen. Dadurch können zur Codierung die erforderlichen Daten unmittelbar von der abzufotografierenden Vorlage abgelesen werden. Das erfindungsgemäße Verfahren zur Herstellung solcher Mikrofilmkarten erspart die bisher erforderliche Codierstation mit dem Filmkartenleser, dem Locher und dem Lochduplizierer. Es ermöglicht auch größere, besser lesbare Klarschrift am oberen Rand der Mikrofilmkarte.

Fig 1

EP 0 093 291 A2

0093291

Dr. Welp Entwicklungs-KG          6350 Bad Nauheim

- 1 -

Verfahren zur Herstellung von Mikrofilmkarten,
nach diesem Verfahren hergestellte Mikrofilmkarte sowie Mikrofilmkamera zur Durchführung
des Verfahrens

Die Erfindung bezieht sich auf ein Verfahren zur Herstellung von maschinell sortier- und selektierfähigen
Mikrofilmkarten, welche in einem Filmfenster einen fotografischen Film als optischen Informationsträger aufweisen und zusätzlich eine Codierung für Sortierkriterien
wie z.B. Zeichnungsnummern, Zeichnungstitel haben. Weiterhin betrifft die Erfindung eine Mikrofilmkarte mit einem
Filmfenster, in dem ein fotografischer Film als optischer
Informationsträger vorgesehen ist und die ein Codierfeld für Sortierkriterien wie z.B. Zeichnungsnummern,
Zeichnungstitel hat. Ebenfalls hat die Erfindung eine
Mikrofilmkamera für Mikrofilmkarten gemäß der Erfindung
zum Gegenstand. Ein solches Verfahren, eine solche Mikrofilmkarte und die entsprechende Mikrofilmkamera sind in
der Mikrofilmtechnik allgemein gebräuchlich und bekannt.

Seit über 20 Jahren werden wertvolle Schriftstücke, wie
z.B. technische Zeichnungen, Pläne oder Patentschriften
auf Filmlochkarten gespeichert. Für das Umstellen der
Originale auf Filmlochkarten benötigt man drei Geräte:

Dr. Welp Entwicklungs-KG                    6350 Bad Nauhe

- 2 -

eine Lochkartenkamera zum Erstellen der Silberkarten,
ein Dupliziergerät zum Erstellen von Duplikarten und
einen kombinierten Locher und Lochduplizierer zur Loch
der Silber- und der Duplikarten. Während das Bedienen
Kamera und Dupliziergerät einfache Tätigkeiten sind, w
die fotografischen Prozesse in der Lochkartenkamera un
im Dupliziergerät nach Knopfdruck weitgehend automatis
ablaufen, erfordert das Bedienen des Lochers Spezialkenntnisse, große Fertigkeit und viel Aufmerksamkeit
der Bedienperson. Die meist vielstellige, alphanumeri s
Codierung der Vorlage muß dabei in eine Lochung umges€
werden. Wird dabei in den je Zahl oder Buchstaben 55
möglichen Spalten und 11 möglichen Zeilen auch nur eir
Kennung falsch gelocht, ist die Filmlochkarte wertlos

Filmlochkarten müssen in zwei Arbeitsgängen erstellt (
den, deren Kosten mit je 0,75 DM etwa gleich groß sin
Im ersten Arbeitsgang (fotografischer Teil) wird in d
Lochkartenkamera die Silberkarte und anschließend im
Dupliziergerät davon die gewünschte Zahl von Duplikar
erstellt. Im zweiten Arbeitsgang (Lochung der Pappe)
erfolgt die Codierung der Silber- und Duplikarten im
Locher. Dabei stellt z.B. bei der Zeichnungsverfilmui
eine zusätzliche Schwierigkeit das Ablesen und Codier
der Zeichnungs-Nummer dar. Diese ist bei allen Zeichr
in der rechten unteren Ecke innerhalb eines detailrei
Schriftfeldes untergebracht. Wollte man von den Orig:
ablesen, müßte nach jedem Ablesen die oberste Zeichnu
des Stapels weggelegt werden, was ein zusätzlicher, l
ständlicher Arbeitsgang wäre. Um diesen zu sparen, li
man üblicherweise die noch ungelochten Kamerakarten
ein Lesegerät laufen, auf dem die Zeichnungs-Nummer
größert ablesbar ist. Es wird dann zunächst eine Dat karte gelocht und die Lochung durch doppelte Eingabe
kontrolliert. Die kontrollierte Datenkarte wird dann zusammen mit der Silber- und den dazugehörigen Duplikarten
im Arbeitsgang Lochduplizierung gelocht. Insgesamt ist
also das Erstellen einwandfrei codierter Filmlochkarten
bisher umständlich, zeitraubend und aufwendig. Ein
schwerwiegender Nachteil der Filmlochkarten ist außerdem, daß ihre Codiermöglichkeiten durch die 55 Spalten
und 12 Zeilen zu begrenzt sind. In vielen Betrieben
müssen mehr Kennzeichen codiert werden, als die Filmlochkarte es zuläßt.

Der Erfindung liegt die Aufgabe zugrunde, ein Verfahren
der eingangs genannten Art zu entwickeln, bei dem die
Codierung der Mikrofilmkarten mit möglichst geringem
Aufwand und mit gegenüber den bisher bekannten Codierverfahren erheblich verminderter Fehlerwahrscheinlichkeit
erfolgen kann. Weiterhin soll eine Mikrofilmkarte und
eine Mikrofilmkamera zur Herstellung solcher Mikrofilmkarten entwickelt werden.

Die erstgenannte Aufgabe, welche das erfindungsgemäße
Verfahren betrifft, wird dadurch gelöst, daß die Codierung
vor der Entwicklung des Filmes auf optischem Wege auf den
Film belichtet wird.

Die Vorteile des erfindungsgemäßen Verfahrens ergeben sich
in erster Linie dadurch, daß das Codieren nicht mehr auf
einer der Mikroverfilmung nachgeordneten, hierzu besonders
gestalteten, aufwendigen Vorrichtung, nämlich auf dem
Locher, erfolgen muß, sondern an demselben Arbeitsplatz wie
das Verfilmen der Vorlage erfolgen kann. Dadurch können mit
dem erfindungsgemäßen Verfahren Mikrofilmkarten mit

Dr. Welp Entwicklungs-KG                    6350 Bad Nauheim

- 4 -

Codierung wesentlich schneller hergestellt werden als nach dem bekannten Verfahren zur Herstellung von Filmlochkarten.

Hervorzuheben ist auch, daß die Fehlerhäufigkeit beim Einbelichten des Codes in die erfindungsgemäße Mikrofilmkarte viel geringer ist als beim getrennten Lochen der Filmlochkarten. Denn beispielsweise eine lange alphanumerische Zeichnungs-Nr., die als Code in eine erfindungsgemäße Mikrofilmkarte eingegeben werden soll, kann direkt vom Kopf der Zeichnung abgelesen und auf ein daneben liegendes Tastenfeld übertragen werden. Das umständliche Übernehmen der Zeichnungs-Nr. vom Bildschirm eines Lesegerätes und das Anfertigen einer nur diesem Zweck dienenden Datenkarte entfällt beim erfindungsgemäßen Verfahren.

Das erfindungsgemäße Verfahren ist viel weniger aufwendig als das Erstellen von Filmlochkarten, denn es entfallen ein Arbeitsgang und Fehlermöglichkeiten. In Zahlen ausgedrückt: Während das Erstellen einer Filmlochkarte mit 40 Kennungen etwa 2 x 75 Pf. = DM 1,50 kostet, tritt beim Erstellen der erfindungsgemäßen Mikrofilmkarte zum fotografischen Teil von 75 Pf. nur noch der Aufwand für das Eintasten des optischen Codes in der Kamera, der mit etwa 5 Pf. angesetzt werden kann. Außerdem entfällt beim Filmcodesystem der Arbeitsgang der Lochduplizierung für die Duplikate, denn der fotografische Code wird beim Erstellen der Duplikarten im Dupliziergerät gleichzeitig mit dem Negativ übertragen. Der Unterschied im Aufwand-/Nutzenverhältnis von erfindungsgemäßen Mikrofilmkarten zu Filmlochkarten wird noch erheblich größer, wenn man berücksichtigt, daß erstere

Dr. Welp Entwicklungs-KG          6350 Bad Nauheim


- 5 -


eine erheblich größere Speicherkapazität haben als die Filmlochkarten.

Von Vorteil ist es, wenn die Codierung an einer Schmalseite des Filmes aufgebracht wird, weil dann ein üblicher Film von z. B. 35 mm Breite verwendet werden kann.

Vom Arbeitsablauf her besonders günstig ist es, wenn die Daten für die Codierung vor dem Abfotografieren der Vorlage unmittelbar von der Vorlage abgelesen und in das Codierfeld des Filmes belichtende, optische Signale umgewandelt werden. Bei dieser Verfahrensweise kann beim Ablesen des Schriftfeldes der Zeichnung zum Zwecke der Codierung zugleich die Zeichnung als Ganzes hinsichtlich ihrer richtigen Lage und Zeichnungsqualität oder Falten und Knicke kontrolliert werden.

Die Mikrofilmkamera wird besonders einfach, wenn die optischen Signale während des Zuführens der Mikrofilmkarten in der Mikrofilmkamera aus einem Eintastspeicher seriell einbelichtet werden.

Eine leichte Überprüfung und erforderlichenfalls Berichtigung der Codierung ist möglich, bevor der Film belichtet wird, wenn die eingegebene Codierung vor der Belichtung des Filmes auf einer Dialoganzeige angezeigt wird. Durch diese Maßnahme wird die Ausschußquote beim Mikroverfilmen besonders gering.

Dr. Welp Entwicklungs-KG                    6350 Bad Nauheim

- 6 -

Die zweitgenannte Aufgabe, nämlich die Schaffung einer Mikrofilmkarte, wird erfindungsgemäß dadurch gelöst, daß das Codierfeld ein optisches Codierfeld auf dem Film ist. Die Vorteile einer solchen Mikrofilmkarte ergeben sich sinngemäß aus den genannten Vorteilen des erfindungsgemäßen Verfahrens. Sie ist einfacher und billiger herstellbar als die bisher gebräuchlichen Filmlochkarten. Bei entsprechender Umstellung auf die optische Codierung kann die erfindungsgemäße Mikrofilmkarte genauso verwendet werden wie bisherige Filmlochkarten. Ihre Kopfzeile kann z.B. in einem Lesedrucker erzeugt werden, der den optischen Code liest und dadurch den Druck vornimmt. Sortiert werden können die erfindungsgemäßen Mikrofilmkarten in einem bewährten Maulsorter, der natürlich statt einer Lochlesevorrichtung eine Fotodiodenzeile enthalten muß.

Die erfindungsgemäße Mikrofilmkarte, welche man als Filmcodekarte bezeichnen könnte, kann in ihren äußeren Abmessungen und hinsichtlich Größe und Position des Filmbildes der Filmlochkarte gleichen. Abweichend davon ist in ihr aber das Filmstück beispielsweise zur linken Seite hin und beispielsweise um 15 mm verlängert. Dies verlängerte Filmstück dient der Aufnahme eines optischen Codes, der an Stelle der Papplochung tritt.

Ein weiterer Vorteil der erfindungsgemäßen Mikrofilmkarte liegt darin, daß ihr optischer Code viel mehr Kennmöglichkeiten trotz seiner kleinen Fläche als die Lochung der Pappe bietet. Dies verdeutlichen folgende Zahlen:

0093291

Dr. Welp Entwicklungs-KG          6350 Bad Nauheim

- 7 -

Die Zahl der maximal möglichen Zeichen beträgt bei der
Filmlochkarte 53. Dagegen bietet der Film durch sein
hohes Auflösungsvermögen die Möglichkeit, einen fotografischen Code vielfach höherer Kapazität aufzubringen.
Dies verdeutlichen folgende Zahlen:

Wird ein Fotocode mit einem quadratischen Platzbedarf
von 1 mm$^2$/bit aufbelichtet und benötigt dieser 7 Binärstellen (z. B. ASCI-Code) für ein Zeichen, so lassen sich
auf einem neben der Filmfläche sich  befindenden Feld der
Größe von beispielsweise 14 mm x 32 mm 64 Zeichen plazieren. Halbiert man die bit-Kantenlänge, so sinkt der
Platzbedarf eines bits auf 0,25 mm$^2$. Es lassen sich
nunmehr 256 Zeichen auf der gleichen Fläche unterbringen.

Da Auftragen und Auswerten des Codes auf optischem Weg
erfolgen, bereiten derartige Dimensionierungen zwecks
Erhöhung der Speichkapazität keine Probleme.

Die erhöhte Zahl der Zeichenvariationen ist in der
Elektronischen Daten-Verarbeitung von großer Bedeutung
und erhöht  Nutzen und Anwendbarkeit der erfindungsgemäßen
Mikrofilmkarte gegenüber der Filmlochkarte erheblich. Dies
verdeutlichen beispielsweise drei Anwendungsgebiete:

a) beim Speichern von Zeichnungen ist es aufgrund der
   hohen Speicherkapazität von 256 Zeichen erfindungsgemäß möglich, Bestimmungs-, Ausführungs- und Ursprungsangaben sowie alle in der Praxis vorkommenden
   Sortierkriterien unterschiedlichster Art, wie Angaben
   über Werkstoffe, deren Verarbeitung etc., schon beim
   Verfilmen in die erfindungsgemäße Mikrofilmkarte einzugeben.

Dr. Welp Entwicklungs-KG          6350 Bad Nauheim

- 8 -

b) Beim Speichern von Patentschriften können viel mehr
Kriterien eingegeben werden als bisher möglich, wodurch Klassifizierungen und Abgrenzungen erleichtert
werden.

c) Für jegliche Art von Datenbank bietet die erfindungsgemäße Mikrofilmkarte ungleich bessere Kapazität und
Möglichkeiten als das Filmlochkarten-System.

Da das Speichervolumen der erfindungsgemäßen Mikrofilmkarte
in der Elektronischen Daten-Verarbeitung Verwendung findet,
lassen sich alle alpha-numerischen Informationen von
Zeichnungen oder Patentschriften sowie Zusatzinformationen,
welche bereits codiert auf der Mikrofilmkarte vorhanden sind,
schnell und fehlerfrei eingeben. Der Filmcode wird automatisch von der Peripherie eines Computers eingelesen und in
vom Anwender vorbereitete und definierte Sortierdateien
gegeben. Da dem Anwender fast beliebig viele Sortier- und
Suchkriterien zur Verfügung stehen, ist ein viel schnellerer,
sicherer und somit rationellerer Zugriff der Zeichnungen oder
Patentschriften im Betrieb möglich als mit der Filmlochkarte.
Die erfaßten Daten stehen ferner anderen Operationen der
Elektronischen Daten-Verarbeitung zur Verfügung.

Die erfindungsgemäße Mikrofilmkarte bietet zusätzlich den
Vorteil, Leseinformationen aus Buchstaben, Zahlen oder
Zeichen in beliebiger Größe übersichtlich auf der gesamten
Pappfläche aufzubringen; denn die bisherige, aufgrund der
Lochung erforderliche räumliche Begrenzung des Klartextes
auf 3 mm Höhe und die oberste Zeile entfällt. Schriftform
und -größe des Klartextes sind nunmehr frei wählbar.

Dr. Welp Entwicklungs-KG                    6350 Bad Nauheim

- 9 -

Während die Filmlochkarte keine Kennung für Kleinbuchstaben und Steuerzeichen enthält, bietet die erfindungsgemäße Mikrofilmkarte beide Möglichkeiten. Der optische
Code kommt daher durch seine erheblich höhere Kapazität
den Wünschen vieler Anwender sehr entgegen.

Die erfindungsgemäße Filmlochkarte bietet auch den Vorteil,
daß auf ihr der Klartext in der Beschriftungsleiste beliebig groß gewählt werden kann. Dagegen kann er bei der
bekannten Filmlochkarte wegen der Position der obersten
Lochzeile  nur 3 mm groß sein- ist also schlecht lesbar.
Beim Handhaben der erfindungsgemäßen Filmlochkarte, z. B.
beim Heraussuchen einzelner Karten, erleichtert große,
deutliche Schrift die Arbeit sehr.

Von Vorteil ist bei der erfindungsgemäßen Mikrofilmkarte,
daß das Codieren der Duplikarten automatisch gleichzeitig mit dem Duplizieren des Filmbildes erfolgt. Dagegen ist bei Filmlochkarten dafür ein besonderer Arbeitsgang im Locher/Duplizierer notwendig.

- 10 -

Da bei der erfindungsgemäßen Mikrofilmkarte der Filmcode mit 256 alphanumerischen Zeichen, welches ungefähr dem Informationsgehalt eines Personalcomputerbildschirms entspricht, für Praxis- sowie für EDV-Anwendung genügend dimensioniert ist, lassen sich auch externe Archive, welche über keine kostenintensive  Standleitung (auf Grund großer Entfernung) zum Zentralcomputer verfügen, sicher, rationell und schnell organisieren. Die außenstehenden Archive verfügen über eigenständige, preisgünstige EDV-Organisationssyteme. Vom Zentralarchiv werden den Außenstellen Filmcodekarten zugesandt. Da die jeweilige Zeichnung einer Filmcodekarte bereits komplett verbal und nummernmäßig beschrieben ist, kann der im Außenarchiv stehende Computer die Daten des Filmcodes übernehmen. Dies geschieht automatisch im Stapelbetrieb mittels elektronischer Abtastung. Als mögliche Vorteile ergeben sich

- langwierige personalintensive, manuelle Eingabe des Computers entfällt

- Wegfall kostenintensiver Standleitungen

- das parallele Verschicken von Disks für außenstehende Computer entfällt, da gesamte Information auf der Karte konzentriert ist.

Ein Vergleich der erfindungsgemäßen Mikrofilmkarte mit einer Filmlochkarte ergibt für die erfindungsgemäße Mikrofilmkarte folgende Vorteile:

Vielfach höheres Speichervolumen an zeichnungsbegleitender Information von ca. 256 anstelle bisheriger 60 alphanumerischer Zeichen führt zu der Möglichkeit:

- umfassende Zeichnungsbeschreibung ohne Abkürzung
- vollständiger Erfassung betriebsinterner sowie eventuell anfallender betriebsexterner Zeichnungsnummernsysteme
- Erfassung sämtlicher Klassifizierungsmerkmale wie Zugehörigkeit nach Projekt

<div align="center">Funktion</div>

<div align="center">Fertigungsebene</div>

- Speicherung aller für eine EDV-Datenbankhierarchie erforderlichen Daten
- automatischer Erfassung des Originalformats

Computergerechte Speicherung durch Aufbelichtung eines leistungsfähigen Codes (Leistung = Informationsgehalt pro Fläche)auf ein neben der Bildfläche liegendes Filmfeld;

Klartextdruck erfolgt ohne manuellen Eingriff durch automatische Abtastung des Codes mittels Interpreters;

Anwenderoptimierte Platzaufteilung der Gesamtkartenfläche:

| | Filmlochkarte | | erfindungsgemäße Mikrofilmkarte | |
|---|---|---|---|---|
| | $cm^2$ | % | $cm^2$ | % |
| Fläche gesamt | 153,34 | 100 | 153,34 | 100 |
| Fläche Zeichnung | 17,75 | 11,57 | 17,75 | 11,57 |
| Fläche Code gesamt | 100 bei 60 Zeichen | 65,27 | 4,5bei256 Zeichen | 2,9 |
| Fläche Klartext | 9,5 | 6,19 | 108 | 70,43 |
| Fläche ungenutzt | 26,02 | 16,97 | 23,09 | 15,05 |

- Automatisierung der Rückvergrößerung durch Erkennen des Originalformats aus dem Code lassen sich gemäß

**0093291**

Dr. Welp Entwicklungs-KG                    6350 Bad Nauheim

Vorgabe im Stapelbetrieb
- Rückvergrößerungen im Originalformat
- Rückvergrößerungen vergrößert oder verkleinert
- Infoprints mit einheitlichem Papierformat
schnell erstellen

- Möglichkeit der EDV-orientierten Organisation der
  Archive
  - Erstellung von Sortierdateien durch maschinelles
    Einlesen des Codes
  - umfangreiche Sortierkriterien durch hohe Speicherkapazität des Filmcodes
  - zuverlässige Möglichkeit des schnellen Zugriffs ein-
    zelner Mikrofilmkarten sowie Überprüfung (Voll-
    ständigkeit)
  - Möglichkeit der Erstellung von Zeichnungssätzen nach
    verschiedenen Kriterien wie z. B. deren Zugehörigkeit, wie z. B. deren Zugehörigkeit nach
                Projekten
                Gerätetypen
                Fertigungsebenen
                Funktionsebenen

Die an letzter Stelle genannte Aufgabe, nämlich die
Schaffung einer Mikrofilmkamera, wird erfindungsgemäß
dadurch gelöst, daß eine optische Codiereinrichtung
zum Einbelichten einer Codierung auf den Mikrofilm
in der Mikrofilmkamera vorgesehen ist. Eine solche
Mikrofilmkamera ermöglicht es, bei der Vorlagenverfilmung auf einfache Weise eine optische Codierung auf
dem Film anzubringen. Konstruktiv besonders einfach ist
die Mikrofilmkamera, wenn sie wie im Anspruch 10 angegeben gestaltet ist.

Bei einer umfangreichen Codierung kann die Anordnung der erforderlichen Anzahl von Leuchtdioden in der Codierstation Schwierigkeiten bereiten. Solche Platzprobleme können vermieden werden, wenn die Codierstation statt der Leuchtdioden eine Kathodenstrahlröhre aufweist, wie das im Anspruch 11 angegeben ist.

Besonders einfach läßt sich eine aus zwei Zeilen von 7 Spuren mit 32 Stellen gebildete Codierung, wie im Anspruch 12 angegeben, erzeugen. Eine solche Codierung kann auf einfache Weise in 14 Schritten hergestellt werden, das bedeutet, die Mikrofilmkamera wird 14 x mit Codierzeichen belichtet. Bei Einsatz geeigneter Kathodenstrahlröhren entfällt die schrittweise Belichtung, da diese Röhren den Strahl selbst ablenken können.

Das Codieren der Mikrofilmkarten kann automatisch durch einen Computer gesteuert werden, wenn die Mikrofilmkamera wie im Anspruch 13 angegeben gestaltet ist.

Die Erfindung läßt zahlreiche Ausführungsmöglichkeiten zu. Zur Verdeutlichung ihres Grundprinzips sind in der Zeichnung dargestellt in

Figur 1 - eine erfindungsgemäß gestaltete Mikrofilmkarte;

Figur 2 - eine Draufsicht auf ein Aufnahmegerät mit einer Mikrofilmkamera;

Figur 3 - eine schematische Darstellung des Aufbaus der Mikrofilmkamera.

Dr. Welp Entwicklungs-KG                6350 Bad Nauheim

- 14 -

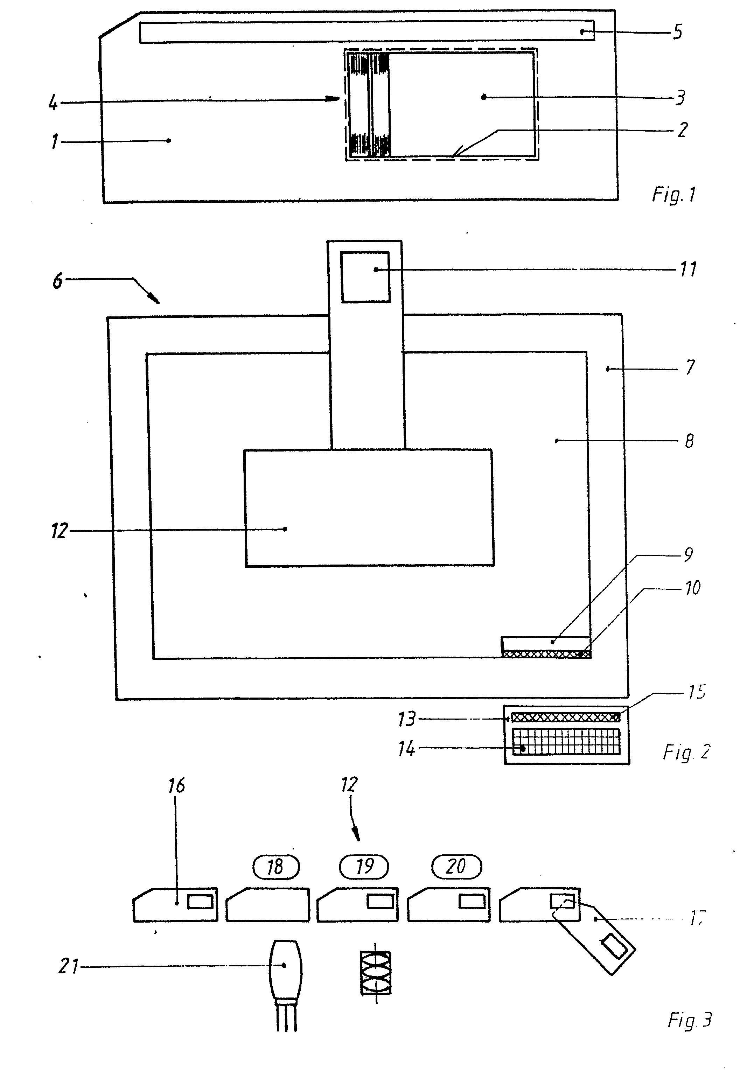

Die Figur 1 zeigt eine Mikrofilmkarte 1 aus Kartonpapier, welche in einem Filmfenster 2 einen fotografischen Film 3 hat. Die Mikrofilmkarte kann gleiche
äußere Abmessungen haben wie die bisher verwendeten
Filmlochkarten. Das Filmfenster 2 ist jedoch etwas
länger als üblich, beispielsweise statt 48 mm 63 mm,
damit auf dem Film 3 an einer Schmalseite ein Codierfeld 4 für optische Codierungen vorgesehen werden kann.
Das Bildfeld kann bei der Mikrofilmkarte 1 an gleicher
Stelle und in gleicher Größe wie bei üblichen Filmlochkarten angeordnet sein. Das Codierfeld 4 kann hinsichtlich seiner Kapazität unterschiedlich ausgelegt werden.
Vorzugsweise hat es zwei Codezeilen mit 7 Spuren von
jeweils 32 Stellen.

Oberhalb des Filmfensters 2 ist, wie bei Filmlochkarten
üblich, eine Kopfleiste 5 vorgesehen, welche zur Aufnahme eines Textes zur Beschreibung des Bildinhalts
dient.

Die Belichtung, Codierung und Entwicklung der Mikrofilmkarten 1 erfolgt in einem Aufnahmegerät 6, welches in
Figur 2 dargestellt ist. Dieses Aufnahmegerät 6 hat
einen Vorlagentisch 7, auf dem eine zu verfilmende Zeichnung 8 mit einem Schriftfeld 9 liegt. Im Schriftfeld 9
ist wie üblich eine Zeichnungsnummer 10 eingetragen.

Oberhalb des Vorlagentisches 7 ist an einer Säule 11
höhenverstellbar eine Mikrofilmkamera 12 angebracht. An
der von der Bedienungsseite her gesehen rechten vorderen
Ecke des Vorlagentisches 7 befindet sich ein Bedienpult
13 mit einem Tastenfeld 14 und einer Dialoganzeige 15.

Dr. Welp Entwicklungs-KG          6350 Bad Nauheim

- 15 -

Zur Codierung einer Mikrofilmkarte 1 wird von einer Bedienperson die Zeichnungsnummer 10 von der Zeichnung 8
abgelesen und mittels des blick- und griffgünstig angeordneten Tastenfeldes 14 eingetastet. Die Zeichnungsnummer erscheint dann zunächst auf der Dialoganzeige 15
am oberen Rand des Bedienpultes 13. Durch Vergleich der
untereinander stehenden Zeichnungsnummern auf dem Original und der Dialoganzeige 15 kann die Bedienperson
prüfen, ob sie die Zeichnungsnummer richtig eingetippt
hat. Sobald dies festgestellt ist, wird eine Auslösetaste gedrückt. Es erfolgt dann in der Mikrofilmkamera
12 zunächst die Belichtung des Codes und anschließend
das Belichten der Zeichnung 8. Es schließen sich Fixierung, Wässerung, Trocknung und Auswurf der fertigen
Mikrofilmkarte 1 an. Zur näheren Beschreibung sei auf
Figur 3 Bezug genommen.

Die Figur 3 zeigt den Weg einer Mikrofilmkarte von einem
Filmkartenstapel 16 durch die Mikrofilmkamera 12 hindurch bis zu einer Ablage 17. In der Mikrofilmkamera 12
durchläuft die Mikrofilmkarte nacheinander eine Codierstation 18, dann eine Belichtungsstation 19 und anschließend eine Entwicklungs-Fixier- und Trocknungsstation 20. Die Codierstation 18 enthält eine Kathodenstrahlröhre 21, durch welche der Film 3 entsprechend
der eingetippten Codierung belichtet werden kann. Zweckmäßig ist es, die Mikrofilmkarte im Bereich der Codierstation 18 schrittweise zu fördern und mit jedem Schritt
jeweils eine Codierlinie zu belichten.

Statt der Kathodenstrahlröhre kann man auch beispielsweise 2 x 7 Leuchtdioden vorsehen, über die die Mikro
filmkarten laufen, so daß ihre Codierfelder 4 entsprechend

Dr. Welp Entwicklungs-KG                 6350 Bad Nauheim

- 16 -

der Codierung belichtet werden. Auch andere Lichtquellen, z.B. Glasfasern oder Laserstrahlen können zum Aufbelichten des Codes benutzt werden.

Dr. Welp Entwicklungs-KG                 6350 Bad Nauheim

Dr. Welp Entwicklungs-KG          6350 Bad Nauheim

- 1 -

Ansprüche
_____

1. Verfahren zur Herstellung von maschinell sortier-
   und selektierfähigen Mikrofilmkarten, welche in einem
   Filmfenster einen fotografischen Film als optischen
   Informationsträger aufweisen und zusätzlich eine
   Codierung für Sortierkriterien wie z. B. Zeichnungsnummern, Zeichnungstitel haben, d a d u r c h
   g e k e n n z e i c h n e t , daß diese Codierung
   vor der Entwicklung des Films auf optischem Wege auf
   den Film belichtet wird.

2. Verfahren nach Anspruch 1, d a d u r c h  g e -
   k e n n z e i c h n e t , daß die Codierung an
   einer Schmalseite des Films aufgebracht wird.

3. Verfahren nach Anspruch 1 oder einem der folgenden,
   d a d u r c h  g e k e n n z e i c h n e t , daß
   die Daten für die Codierung vor dem Abfotografieren der

Dr. Welp Entwicklungs-KG                    6350 Bad Nauheim

- 2 -

Vorlage unmittelbar von der Vorlage abgelesen und
in das Codierfeld des Filmes belichtende optische
Signale umgewandelt werden.

4. Verfahren nach Anspruch 1 oder einem der folgenden,
   d a d u r c h   g e k e n n z e i c h n e t, daß die
   optischen Signale während des Zuführens der Mikrofilmkarten in einer Mikrofilmkamera aus einem Eintastspeicher einbelichtet werden.

5. Verfahren nach Anspruch 1 oder einem der folgenden,
   d a d u r c h   g e k e n n z e i c h n e t, daß die
   eingegebene Codierung vor der Belichtung des Filmes
   angezeigt wird.

6. Mikrofilmkarte mit einem Filmfenster, in dem ein
   fotografischer Film als optischer Informationsträger vorgesehen ist und die ein Codierfeld für
   Sortierkriterien wie z.B. Zeichnungsnummern, Zeichnungstitel hat, d a d u r c h   g e k e n n z e i c h-
   n e t, daß das Codierfeld ein optisches Codierfeld
   (4) auf dem Film (3) ist.

7. Mikrofilmkarte nach Anspruch 6, d a d u r c h
   g e k e n n z e i c h n e t, daß das Codierfeld (4)
   an einer Schmalseite des Filmes (3) vorgesehen ist.

8. Mikrofilmkarte nach den Ansprüchen 6 oder 7, d a-
   d u r c h   g e k e n n z e i c h n e t, daß das
   Codierfeld (4) zwei 7-Spur-Codezeilen mit jeweils
   32 Stellen hat.

9. Mikrofilmkamera zur Herstellung von Mikrofilmkarten, g e k e n n z e i c h n e t   d u r c h   eine optische Codiereinrichtung zum Einbelichten einer Codierung auf den Mikrofilm (3).

10. Mikrofilmkamera nach Anspruch 9, d a d u r c h g e k e n n z e i c h n e t , daß die Codiereinrichtung durch zwei Zeilen von Leuchtdioden gebildet ist, welche im Einlauf der Mikrofilmkamera (12) für die Mikrofilmkarten (1) angeordnet sind.

11. Mikrofilmkamera nach Anspruch 9, d a d u r c h g e k e n n z e i c h n e t , daß sie eine Codierstation (18) mit einer Kathodenstrahlröhre (21) zur Codierung der Mikrofilmkarten (1) enthält.

12. Mikrofilmkamera nach Anspruch 11, d a d u r c h g e k e n n z e i c h n e t , daß die Kathodenstrahlröhre (21) zur Belichtung von einer Codierzeile ausgelegt ist und daß die Mikrofilmkamera eine Transporteinrichtung zum zeilenweisen Vorrücken der Mikrofilmkarten (1) in der Codierstation (18) enthält.

13. Mikrofilmkamera nach Anspruch 9 oder einem der folgenden, d a d u r c h g e k e n n z e i c h - n e t , daß sie eine Verbindungsstelle zum Anschluß an einen Computer hat.

0093291

Fig.1

Fig. 2

Fig.3